# EUROPEAN PATENT SPECIFICATION

(11) **EP 3 130 176 B1**
(45) Date of publication and mention of the grant of the patent: **05.06.2019**
(21) Application number: 15715380.0
(22) Date of filing: 01.04.2015
(51) Int. Cl.: H04W 40/18, H04W 40/24, H04W 40/30, H04W 40/34, H04W 40/38, H04W 84/18

(54) **ROUTING METHOD AND APPARATUS IN AD-HOC NETWORK**
ROUTINGVERFAHREN UND -GERÄTE IN AD-HOC-NETZWERKEN
PROCÉDÉ ET APPAREIL DE ROUTAGE DANS UN RÉSEAU AD HOC

(30) Priority: 07.04.2014 GB 201406288; 08.04.2014 EP 14250071
(43) Date of publication of application: 15.02.2017
(73) Proprietor: BAE Systems PLC, London SW1Y 5AD (GB)
(72) Inventor: DEARLOVE, Christopher, Mark, Chelmsford Essex CM2 8HN (GB); CULLEN, Alan, Manuel, Chelmsford Essex CM2 8HN (GB); HUDSON, Peter,Noble, Preston Lancashire PR4 1AX (GB); EISSA, Rania, Hamdi, Preston Lancashire PR4 1AX (GB)
(74) Representative: BAE SYSTEMS plc Group IP Department
(86) International application number: PCT/GB2015/051019
(87) International publication number: WO 2015/155509

(56) References cited:
- BURGESS J ET AL: "MaxProp: Routing for Vehicle-Based Disruption-Tolerant Networks", INFOCOM 2006. 25TH IEEE INTERNATIONAL CONFERENCE ON COMPUTER COMMUNICA TIONS. PROCEEDINGS, IEEE, PISCATAWAY, NJ, 1 April 2006 (2006-04-01), pages 1-11, XP031072268, DOI: 10.1109/INFOCOM.2006.228 ISBN: 978-1-4244-0221-2

## Description

### FIELD OF THE INVENTION

The present invention relates to ad hoc communications networks. The present invention relates in particular to, but is not limited to, ad hoc wireless networks, including in particular, but not limited to, ad hoc wireless networks in which some or all of the nodes are vehicles, for example unmanned air vehicles (UAVs).

### BACKGROUND

Various types of ad hoc networks are known, for example ones based on "proactive routing protocols", which includes protocols that are known as "link state routing protocols". One known link state routing protocol for ad hoc networks is the Optimised Link State Routing Protocol version 2 (OLSRv2) [RFC 7181].

One known use of ad hoc networks is to provide a wireless communications network where some or all of the nodes are vehicles, for example unmanned air vehicles (UAVs).

In the more general field of computer and communications networks, it is known to provide delay-tolerant networks (DTNs), which recently are sometimes referred to as disruption-tolerant networks.

LINDGREN SICS A DORIA CONSULTANT E DAVIES FOLLY CONSULTING S GRASIC LULEA UNIVERSITY OF TECHNOLOGY A: "Probabilistic Routing Protocol for Intermittently Connected Networks; drfaft-irtf-dtnrg-prophet-10.txt", Internet Engineering Task Force, IETF; STANDARDWORKINGDRAFT, INTERNET SOCIETY (ISOC) 4, RUE DES FALAISES CH- 1205 GENEVA, SWITZERLAND, 22 May 2012, pages 1-122 (hereinafter "Lindgren"), describes a probabilistic routing protocol for intermittently connected networks. The process is described as an epidemic protocol with strict pruning. The process defines a probabilistic metric that the author calls delivery predictability.

The document titled "Delay-Aware Data Delivery in Vehicular Intermittently Connected Networks" pages 1134-1143, describes how mobile vehicles serve as opportunistic store-carry-forward devices and physically transport data bundles from a source at the isolated site and deliver them to a destination at a MAN.

### SUMMARY OF THE INVENTION

The present invention is defined by the independent claims, to which reference should now be made. Specific embodiments are defined by the dependent claims. The present inventor has realised it would be desirable to provide, in an ad hoc network (for example OLSRv2), a capability to store and forward messages to overcome or alleviate situations where there are no suitable conventional bidirectional links available to a node. The present inventor has further realised that it would be advantageous if this could preferably be achieved, in some aspects of the invention, by making use of existing parameters and properties of existing ad hoc network protocols, for example OLSRv2.

In a first aspect, the invention provides a method in an ad hoc network comprising a plurality of nodes, the method comprising: a node advertising a theoretical destination it is not currently connected to as part of a theoretical route; allocating to the theoretical destination, or otherwise associating with the theoretical destination, a special metric value that gives a reduced likelihood of selection as a suitable route for transmitting messages compared to conventionally available routes in the ad hoc network, the ad hoc network (100) employing a routing protocol in which the suitable route is selected based on a value of a combination of the respective link metric values (M1, M2, M3) of the links included in the available routes from which the suitable route is selected; determining that a message from a further node is to be transmitted via the theoretical route; the node receiving the message from the further node when the node is at a first location; the node storing the message; the node moving from the first location to a second location thereby transforming the theoretical route into a new real route; and the node transmitting the message to a second further node as part of the new real route.

The combination of the respective link metric values (M1, M2, M3) of the links included in the available routes from which the suitable route is selected may comprise a summation of the respective link metric values (M1, M2, M3) of the links included in the available routes from which the suitable route is selected.

The special metric value may be of a value that any overall routes that involve the theoretical destination will be ones of last resort.

The special metric value may be higher than that of the conventionally available routes in the ad hoc network.

The ad hoc network may be operated under a proactive routing protocol.

The ad hoc network may be operated under a link state routing protocol.

The ad hoc network may be operated under the OLSRv2 protocol.

Some or all of the nodes may be unmanned vehicles.

Some or all of the nodes may be unmanned air vehicles.

In a further aspect, the invention provides apparatus for use in an ad hoc network, the ad hoc network comprising a plurality of nodes, the apparatus comprising: means for a node to advertise a theoretical destination that the node is not currently linked to as part of a theoretical message route; means for allocating to the theoretical destination, or otherwise associating with the theoretical destination, a special metric value that gives a reduced likelihood of selection as a suitable route for transmitting messages compared to conventionally available routes in the ad hoc network, the ad hoc network (100) employing a routing protocol in which the suitable route is selected based on a value of a combination of the respective link metric values (M1, M2, M3) of the links included in the available routes from which the suitable route is selected; means for determining that a message from a further node is to be transmitted via the theoretical route; means for the node to receive the message from the further node when the node is at a first location; means for the node to store the message; and means for, after the node has moved from the first location to a second location thereby transforming the theoretical route into a new real route, the node to transmit the message to a second further node as part of the new real route.

The combination of the respective link metric values (M1, M2, M3) of the links included in the available routes from which the suitable route is selected comprises a summation of the respective link metric values (M1, M2, M3) of the links included in the available routes from which the suitable route is selected.

The special metric value may be of a value that any overall routes that involve the theoretical destination will be ones of last resort.

The special metric value may be higher than that of the conventionally available routes in the ad hoc network.

The ad hoc network may be operated under the OLSRv2 protocol.

Some or all of the nodes may be unmanned vehicles.

In a further aspect, the invention provides a program or plurality of programs arranged such that when executed by a computer system or one or more processors it/they cause the computer system or the one or more processors to operate in accordance with the method of any of the above aspects.

In a further aspect, the invention provides a machine readable storage medium storing a program or at least one of the plurality of programs according to the above aspects.

In a further aspect, the invention provides a method in an ad hoc network comprising a plurality of nodes, the method comprising: a node advertising a theoretical destination it is not currently connected to as part of a theoretical route; allocating to the theoretical destination, or otherwise associating with the theoretical destination, a special metric value that gives a reduced likelihood of selection as a suitable route for transmitting messages compared to conventionally available routes in the ad hoc network; determining that a message from a further node is to be transmitted via the theoretical route; the node receiving the message from the further node when the node is at a first location; the node storing the message; the node moving from the first location to a second location thereby transforming the theoretical route into a new real route; and the node transmitting the message to a second further node as part of the new real route.

In a further aspect, the invention provides apparatus for use in an ad hoc network, the ad hoc network comprising a plurality of nodes, the apparatus comprising: means for a node to advertise a theoretical destination that the node is not currently linked to as part of a theoretical message route; means for allocating to the theoretical destination, or otherwise associating with the theoretical destination, a special metric value that gives a reduced likelihood of selection as a suitable route for transmitting messages compared to conventionally available routes in the ad hoc network; means for determining that a message from a further node is to be transmitted via the theoretical route; means for the node to receive the message from the further node when the node is at a first location; means for the node to store the message; and means for, after the node has moved from the first location to a second location thereby transforming the theoretical route into a new real route, the node to transmit the message to a second further node as part of the new real route.

### BRIEF DESCRIPTION OF THE DRAWINGS

Figure 1 is a schematic illustration of an ad hoc network;
Figure 2 is a schematic representation of link metric values as typically used in ad hoc networks, including the OLSRv2 protocol;
Figure 3 is a schematic representation of link metric values used in an embodiment; and
Figure 4 is a process flowchart comprising certain steps of a process of operating an ad hoc network.

### DETAILED DESCRIPTION

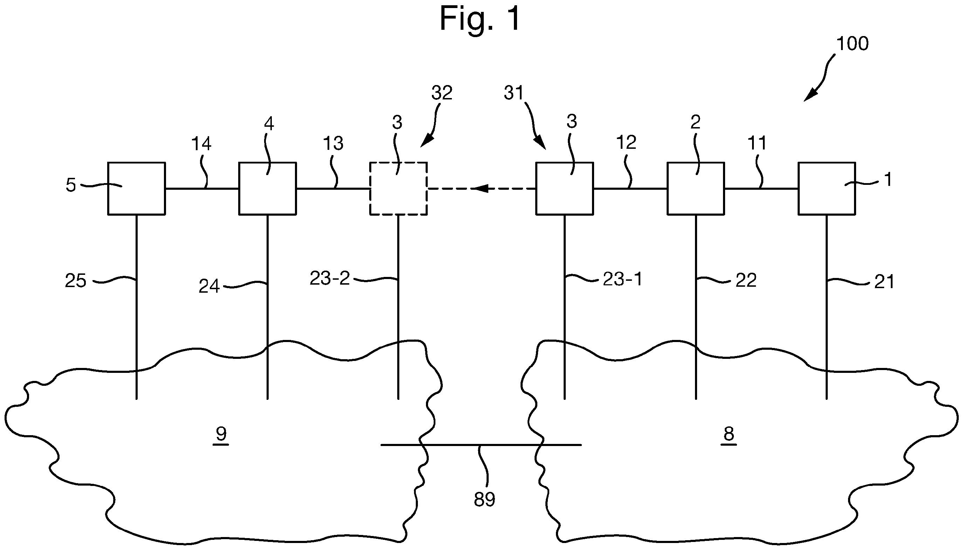

Figure 1 is a schematic illustration of an ad hoc wireless network 100 (hereinafter referred to as a network 100) in which a first embodiment may be implemented. In this embodiment the network 100 comprises a plurality of nodes, of which some are in the form of UAVs. Other nodes may be in other forms, for example manned aircraft and/or ground stations.

In this embodiment the network 100 operates according to the OLSRv2 protocol, in conventional manner, except where stated otherwise below.

By way of example, five UAV nodes are shown in Figure 1, namely a first node 1, a second node 2, a third node 3, a fourth node 4, and a fifth node 5. Also shown schematically in Figure 1 are two sub-networks of the network 100, namely a first sub-network 8 and a second sub-network 9. The sub-networks comprise a plurality of further nodes that are inter-connected in any suitable manner and according to their current situations. The third node 3 is shown twice in Figure 1. A first representation of the third node 3 is drawn in normal line drawing and representing schematically that it is at a first physical location 31. In the scenario under consideration, when at its first location 31, the third node 3 is relatively long distance away from the fourth node 4. In this exemplary scenario, the third node 3 will then move its physical location to a new second position 32 that is relatively closer to the fourth node 4. A second representation of the third node 3 is drawn in dashed line form and schematically represents the third node 3 when it is at its new second position 32.

The nodes of the network 100 are coupled on an ad hoc basis by wireless links established between respective nodes. Some nodes may be coupled to only one other node, whereas other nodes may be coupled to plural other nodes. Figure 1 shows a current situation where in conventional manner all the links are operated as bidirectional links in conventional manner.

In the exemplary current situation shown in Figure 1, a first link 11 is provided between the first node 1 and the second node 2, a second link 12 is provided between the second node 2 and the third node 3 when it is at its initial position 31, a third link 13 is provided between the third node 3 when it is at its later second position 32 and the fourth node 4, and a fourth link 14 is provided between the fourth node 4 and the fifth node 5. Further in this exemplary scenario, links are provided between the UAV nodes and nodes (not shown) in the sub-networks 8 and 9, which for ease of reference will hereinafter be termed sub-network links. By way of example only one such sub-network link is shown for each node in Figure 1, as follows: a first sub-network link 21 is provided between the first node 1 and a node (not shown) in the first sub-network 8, a second sub-network link 22 is provided between the second node 2 and a node (not shown) in the first sub-network 8, a first implementation 23-1 of a third sub-network link is provided between the third node 3 when it is at its initial position 31 and a node (not shown) in the first sub-network 8, a second implementation 23-2 of a third sub-network link is provided between the third node 3 when it is at its later second position 32 and a node (not shown) in the second sub-network 9, a fourth sub-network link 24 is provided between the fourth node 4 and a node (not shown) in the second sub-network 9, and a fifth sub-network link 25 is provided between the fifth node 5 and a node (not shown) in the second sub-network 9. Also shown is a link 89, which for ease of reference will hereinafter be termed the inter-network link 89.

In practice any of the nodes shown in Figure 1 may be coupled by further bidirectional links to further nodes in addition to those shown in the Figure, including further nodes in the first sub-network 8 and the second sub-network 9, and there may be more than one link between the two sub-networks. However, for convenience, and clarity of the drawing, only the above mentioned links will be considered in the following description of this embodiment.

Note that in this exemplary scenario there is no link provided between the third node 3 when it is at its initial position 31 and the fourth node 4 as the two nodes are too far apart, and likewise there is no link provided between the second node 2 and the third node 3 when it is at its later second position 32 as the two nodes are too far apart. Note also that in this exemplary scenario it is assumed that in the time the third node 3 moves from its first position 31 to its later second position 32, relative movement between the other nodes is only of a limited amount that does not alter the provision of the other links.

In operation, in overview let us consider an example situation where the first node 1 requires to send a message to the fifth node 5.

By way of example, in this embodiment, following conventional ad hoc network operation under the OLSRv2 protocol, and in terms of the links available in Figure 1, and provided the inter-network link 89 is available, then the message may be routed from the first node 1 to the fifth node 5 via the inter-network link 89. As part of the overall routing, the route from the first node 1 to the relevant node in the first sub-network 8 will be selected from among the first link 11, the second link 12, the first sub-network link 21, the second sub-network link 22, the first implementation 23-1 of the third sub-network link, and the links available within the first sub-network 8, according to conventional metric value calculations derived from those links. In corresponding fashion, the route from the relevant node in the second sub-network 9 to the fifth node 5 will be selected from among the third link 13, the fourth link 14, the fourth sub-network link 24, the fifth sub-network link 25, the second implementation 23-2 of the third sub-network link, and the links available within the second sub-network 9, according to conventional metric value calculations derived from those links.

As mentioned, which of the above routes is selected will be determined using conventional processes under OLSRv2. More particularly, the network 100 employs a routing protocol that assesses the route on an end-to-end basis. This will include summing the respective OLSRv2 link metric values of the links included in the available routes to provide a summation of the respective OLSRv2 link metric values of the links included in the available routes, with the route with the lowest sum of link metric values being chosen, assuming no other considerations are included. In other embodiments, the respective OLSRv2 link metric values of the links included in the available routes may be combined in ways others than strict summation as such, to provide a combination of the respective OLSRv2 link metric values of the links included in the available routes, with the route being selected based on the value of the combination that fulfils a predetermined criteria (for example highest, or lowest, or other criteria, as appropriate). One example of such a combination is that of a weighted summation of the respective OLSRv2 link metric values of the links included in the available routes.

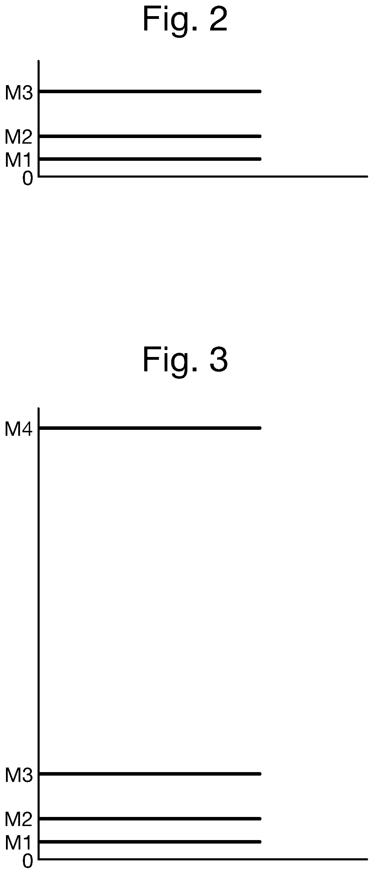

Figure 2 is a schematic representation of link metric values as typically used in ad hoc networks, including the OLSRv2 protocol of this embodiment. (The conventional implementation of metric link values is well known to the skilled person so will only be discussed in a simplified form with reference to Figure 2.) Different metric link values are assigned to or determined for each link. In this simplified example three different metric link values are shown namely (from lowest value to highest value) M1, M2 and M3. Values may typically differ by up to a few orders of magnitude. For example, in this embodiment, M1 may be equal to 2, M2 may be equal to 2³, and M3 may be equal to 2⁵, and:
the respective links (not shown) between the nodes (not shown) within the sub-network 8 each having a metric link value of M1 = 2;
the respective links between the first to fifth nodes, i.e. the first link 11, the second link 12, the third link 13, and the fourth link 14, each having a metric link value of M2 = 2³; and
the respective sub-network links between the first to fifth nodes respectively and the sub-network 8, i.e. the first sub-network link 21, the second sub-network link 22, the first implementation 23-1 and the second implementation 23-2 of the third sub-network link, the fourth sub-network link 24, and the fifth sub-network link 25, each having a metric link value of M3 = 2⁵.

However, in this embodiment, in addition to the above described conventional routes, further possible routes are provided. These further possible routes are provided by virtue of an awareness, estimation or prediction (which may be determined by the third node 3 itself or by one or more other network entities) that the third node 3 will be moving to a new physical location (e.g. its second later position 32), where the third link 13 and the second implementation 23-2 of a third sub-network link 23-2 will be available. The third node 3 advertises therefore the connectivity to destinations in the second sub-network 9 including the fourth node 4 and the fifth node 5. Accordingly, by virtue of the third node receiving the message when at its first location 31, then storing the message while moving to the second later location 32 where it may then forward the message, the third node 3 is able to contribute further routes as available in this embodiment. In particular, the third node 3 contributes availability of a direct path from itself to the fourth node via the third link 13, and also a direct path from itself to the second sub-network 9 via the second implementation 23-2 of the third sub-network link. In this embodiment, the destinations advertised by the third node as part of these further contributed routes are advertised in the same manner in which conventionally, under for example OLSRv2, attached networks are advertised as destinations. Also, in the same manner as destination metrics are allocated, under OLSRv2 for example, to attached networks, a destination metric is allocated to the destination of each of these further contributed routes.

When these further contributed routes are included in the overall available choice of routes, which of the above routes is selected will be determined using conventional processes under OLSRv2. This will include summation of the respective OLSRv2 link metric values of the links included in the available routes, plus, for these further contributed routes, including in the summation of the metric values the allocated destination metric, with the route with the lowest sum of link metric values being chosen, assuming no other considerations are included.

Hence, in this embodiment, when the inter-network link 89 becomes unavailable (and there are no other links between the two sub-networks), or in other scenarios or circumstances where there was no inter-network link between the two sub-networks to begin with, the further routes contributed by the third node that are derived from the third node 3 storing and forwarding the message, can be used instead. In other words, even though the inter-network link 89 is not present, overall routing from the first node 1 to the fifth node 5 can still take place. A first part of the route will be from the first node 1 to the third node 3 when it is at its first position 31 - this first part of the route will be selected from among the first link 11, the second link 12, the first sub-network link 21, the second sub-network link 22, the first implementation 23-1 of the third sub-network link, and the links available within the first sub-network 8, according to conventional metric value calculations derived from those links. A second part of the route will be from the third node 3 when it is at its second position 32 to the fifth node 5 - this first part of the route will be selected from among the third link 13, the fourth link 14, the fourth sub-network link 24, the fifth sub-network link 25, the second implementation 23-2 of the third sub-network link, and the links available within the second sub-network 9, according to conventional metric value calculations derived from those links.

The inventor has realised that although this is advantageous, nevertheless, in most practical scenarios, potential disadvantages of using the available further potential routes (e.g. uncertainty of movement, other links changing during the time the storing and forwarding node is moving, and the resulting time delay in itself) when the conventional routes are nevertheless available will tend to be disproportionate to a benefit of merely providing a wider choice of available routes. This has led to the inventor providing a further aspect in this embodiment, in which it is provided that the new types of routes will only tend to be used if no conventional routes (i.e. in this example, those going via the inter-network link 89) are available. More particularly, those destinations that are provided by virtue of the store and forward operation of the third node (in this example the fourth node 4 and the fifth node 5) are allocated (or otherwise associated with) special (destination) metric values that give a reduced likelihood of selection as a suitable route for transmitting the messages compared to conventionally available routes that do not derive from a store and forwarding process.

Implementation of this latter aspect in this embodiment will now be described with reference to Figure 3.

Figure 3 is a schematic representation of metric values used in this embodiment. Accordingly, the link metric values shown already in Figure 2 are included and indicated by the same reference numerals, and additionally a further metric value, referred to herein as a special metric value M4, is shown, which in this embodiment has the value M4 = 2²². In this embodiment, those destinations that are dependent upon a store and forward process (in this example those destinations that are reached by virtue of the store and forward operation performed, or at least offered as available, by the third node 3 subsequently using the third link 13 or the second implementation 23-2 of the third sub-network link) are assigned the special metric value M4 = 2²². Thus, in comparison to the link metric values assigned to the other links, (i.e. M1 = 2, M2 = 2³, and M3 = 2⁵), the routes with the M4 value are less likely to be selected. Preferably (as indeed the case in this embodiment), the relative value of the special metric value M4 is sufficiently high, e.g. many orders of magnitude, that any overall routes, e.g. the further contributed routes discussed above, that involve one or more special metrics of such value will be ones of last resort, i.e. they will only be used if no conventional routes, including those described earlier above, or indeed even significantly longer routes (not shown), if such routes are made up entirely of conventional links, are available.

In this embodiment all destinations provided by virtue of a store and forward process are allocated (or otherwise associated with) the same special metric value M4. However, this need not be the case, and in other embodiments different such destinations may be allocated (or otherwise associated with) different special metric values. Preferably, however, all such special metric values are nevertheless very high compared to the metric link values allocated to conventional links within the network 100. In further embodiments, one or more special high metric values may be specified or determined dynamically, for example different values may be specified at different times, or on different missions or other deployment variables, or may be varied according to dynamic network characteristics under control of an algorithm, or may be updated under an instruction received via the network, and so on.

Under the OLSRv2 protocol nodes determine which external destinations are reachable and then inform the other nodes of the metrics. In this embodiment, therefore, this aspect of the protocol is varied for the destinations that are to be provided by storing and forwarding, and instead the storing and forwarding node (in this example the third node 3) determines the metric value/values for the artificial destinations it is creating, and informs the second node 2 of this/these values. In other embodiments, any other appropriate other mechanism may be used to allocate a special higher OLSRv2 metric value to (or otherwise associate a special higher OLSRv2 metric value with) a store and forward destination than is allocated to the conventional destinations. For example, physical protocol layer information may be used, and possibly also information from the mission planner.

In the above embodiments the various processes described are implemented in the OLSRv2 protocol layer of a protocol stack. In other embodiments the processes may be implemented in any suitable protocol layer. As the skilled person is well aware, many communications protocol stack configurations are available in the art, and the skilled person will adapt a suitable protocol layer as appropriate depending upon the required or desired protocol stack implementation. Generally speaking, it will also be readily within the capabilities of the skilled person to adapt any other layers of the protocol stack if required to accommodate changes made to the main layer in which he or she is implementing embodiments of the invention.

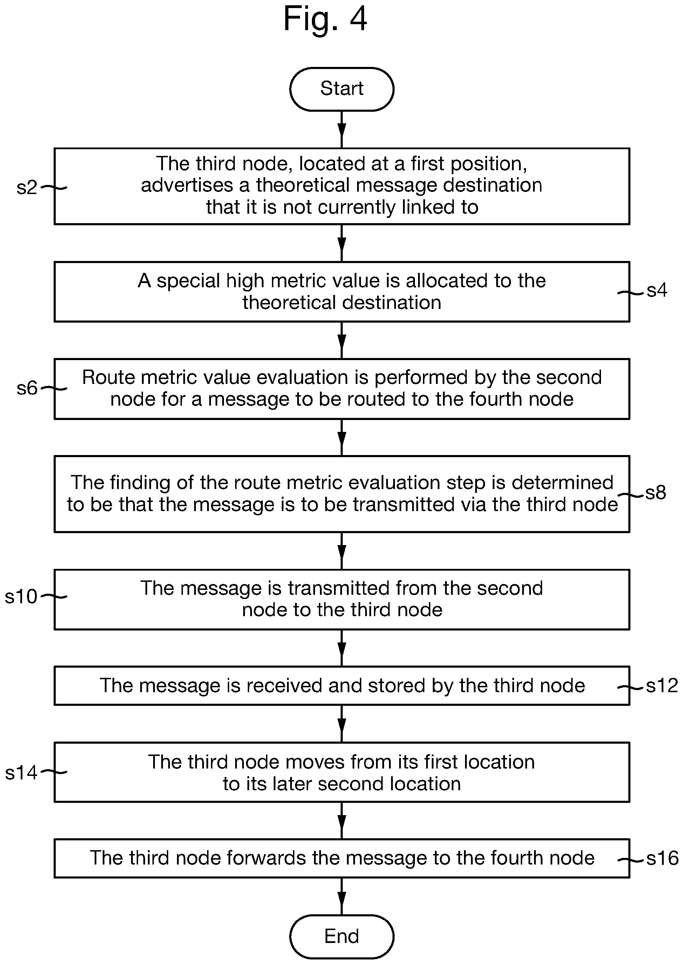

The above described embodiments may further be described and represented in terms of a process flowchart comprising certain steps of those embodiments of a process of operating an ad hoc network, as shown in Figure 4.

Referring to Figure 4, at step s2, the third node, located at a first position 31, advertises a theoretical message destination that it is not currently linked to.

At step s4, a special high metric value (whose value preferably renders the theoretical routes as ones of last resort) is allocated to (or otherwise associated with) the theoretical destination.

At step s6, route metric value evaluation is performed by the second node 2 for a message to be routed to the fourth node 4.

At step s8, the finding of the route metric evaluation of step s6 is determined to be that the message is to be transmitted via the third node (i.e. the prospective storing and forwarding node).

At step s10, the message is transmitted from the second node 2 to the third node 3.

At step s12, the message is received and stored by the third node 3.

At step s14, the third node 3 moves from its first location 31 to its later second location 32.

At step s16, the third node 3 forwards (i.e. transmits) the message to the fourth node 4.

It should be noted that certain of the process steps depicted in the flowchart of Figure 4 and described above may be omitted or such process steps may be performed in differing order to that presented above and shown in Figure 4. Furthermore, although all the process steps have, for convenience and ease of understanding, been depicted as discrete temporally-sequential steps, nevertheless some of the process steps may in fact be performed simultaneously or at least overlapping to some extent temporally.

Apparatus, for implementing the above arrangements and processes as described with reference to Figures 1-4 may be provided by configuring or adapting any suitable apparatus, for example one or more computers or other processing apparatus or processors, and/or providing additional modules. The apparatus may comprise a computer, a network of computers, or one or more processors, for implementing instructions and using data, including instructions and data in the form of a computer program or plurality of computer programs stored in or on a machine readable storage medium such as computer memory, a computer disk, ROM, PROM etc., or any combination of these or other storage media.

In the above embodiments, after the node 3 has stored the message and then moved to its second position 32, the node 3 then transmits the message over a link (in the above examples the third link 13 or the second implementation of the third sub-network link 23-2) that had been known about prior to the storing of the message and which had formed some or all of the basis of the reason the third node 3 had advertised those connections as theoretically available. However, this need not be the case, and in other embodiments, the third node 3 may, during or at the end of the process of moving to the second location 32, instead transmit the message to some other link that has unexpectedly become available during that time.

More generally, in the above embodiments, the third node may determine that it is time to forward the message using any appropriate method. One such appropriate method by way of example is the node may observe its routing table (or any other equivalent routing table or item). In general other possibilities could be by using the routing protocol information, or other sources means such as planning.

In the above embodiments, the described process is applied to any type of message to be routed. However, in other embodiments, only certain types of message may be included, for example only sensor data, say. In yet further embodiments, some messages may be routed as described and not others, dependent upon other factors, for example a prediction of how long the message will need to be stored, or dependent upon the number of nodes available in a range that are sufficiently close to be considered likely to form practical nodes in the near future, and so on.

The above embodiments are implemented using the OLSRv2 protocol. In other embodiments other versions or adaptations of OLSR may be used. Yet further embodiments may be implemented under link state routing protocols other than OLSR, and yet further embodiments may be implemented under other types of proactive routing protocol. Generally, embodiments may be implemented under any suitable ad hoc network protocol in which routes and links are advertised or discovered, and in which some form of link metric value or equivalent parameter or parameters is used for assessing the end-to-end route.

An aspect of at least some of the above embodiments is that the routing metric assessment takes account of the whole end-to-end route. This is in contrast, for example, to the use of a probabilistic metric as disclosed in Lindgren.

In the above embodiments, in order for the special link metric value to be one that gives a reduced likelihood of selection as a suitable route for transmitting the messages compared to conventionally available links that do not derive from a store and forwarding process, the value is higher than that of the conventionally available links, as in OLSRv2 protocol the higher the value of the metric link value, the less desirable is the link. In contrast, in embodiments where a protocol is employed in which lower values of metric link value indicate less desirability of the link, then of course, in order for the special link metric value to be one that gives a reduced likelihood of selection as a suitable route for transmitting the messages compared to conventionally available links that do not derive from a store and forwarding process, the special link metric value will be lower than that of the conventionally available links.

In the above embodiments the ad hoc network includes nodes which are UAVs. However, other embodiments may be implemented in other types of ad hoc network, including, but not limited to, networks where some or all of the nodes are other types of autonomous vehicle, networks where some or all of the nodes are manned vehicles, including for example manned aircraft, networks where some or all of the nodes are satellites, and networks where some or all of the nodes are people, e.g. soldiers or first responders, including any mixtures of the preceding node-type examples.

## Claims

1. A method in an ad hoc network comprising a plurality of nodes distributed in two or more sub-networks, the method comprising: a node determining that it will be moving from a first sub-network to a second sub-network; the node, whilst connected to a first sub-network, advertising a theoretical destination in a second sub-network that the node is not currently connected to, as part of a theoretical route between the first and second sub-networks; associating with the theoretical destination in the second sub-network, a special link metric value that gives a reduced likelihood of selection as a suitable route for transmitting messages compared to conventionally available routes between the first and second sub-networks in the ad hoc network, the ad hoc network employing a routing protocol in which the suitable route is selected based on a value of a combination of the respective link metric values of the links included in the available routes including theoretical routes from which the suitable route is selected the method further comprising:
when conventional routes are not available determining that a message from a further node in the first sub-network is to be transmitted via the theoretical route to a second further node in the second sub-network;
the node receiving the message from the further node when the node is at a first location and whilst connected to the first sub-network;
the node storing the message;
the node moving from the first location to a second location to connect with the second sub-network thereby transforming the theoretical route into a new real route; and
the node transmitting the message to the second further node either directly or via the second sub-network as part of the new real route.

2. A method according to claim 1, wherein the combination of the respective link metric values of the links included in the available routes from which the suitable route is selected comprises a summation of the respective link metric values of the links included in the available routes from which the suitable route is selected.

3. A method according to claim 1 or claim 2, wherein the special link metric value is of a value that any overall routes that involve the theoretical destination will be ones of last resort.

4. A method according to any of claims 1 to 3, wherein the special link metric value is higher than that of the conventionally available routes in the ad hoc network.

5. A method according to any of claims 1 to 4, wherein the ad hoc network is operated under a proactive routing protocol.

6. A method according to any of claims 1 to 5, wherein the ad hoc network is operated under a link state routing protocol, optionally the OLSRv2 protocol.

7. A method according to any of claims 1 to 6, wherein some or all of the nodes are unmanned vehicles.

8. Apparatus in a node of an ad hoc network, the ad hoc network comprising a plurality of nodes distributed in two or more sub-networks, the apparatus comprising: means for determining that the node will be moving from a first sub-network to a second sub-network;
means whilst connected to a first sub-network for the node to advertise a theoretical destination in a second sub-network that the node is not currently linked to as part of a theoretical message route between the first and second sub-networks;
means for associating with the theoretical destination in the second sub-network, a special link metric value that gives a reduced likelihood of selection as a suitable route for transmitting messages compared to conventionally available routes between the first and second sub-networks in the ad hoc network, the ad hoc network employing a routing protocol in which the suitable route is selected based on a value of a combination of the respective link metric values of the links included in the available routes including theoretical routes from which the suitable route is selected; the apparatus further comprising:
means for, when conventional routes are not available, determining that a message from a further node in the first sub-network is to be transmitted via the theoretical route to a second further node in the second ;
means for the node to receive the message from the further node when the node is at a first location and whilst connected to the first sub-network;
means for the node to store the message; and
means for, after the node has moved from the first location to a second location to connect with the second sub-network thereby transforming the theoretical route into a new real route, and the node transmits the message to a second further node either directly or via the second sub-network as part of the new real route.

9. Apparatus according to claim 8, wherein the combination of the respective link metric values of the links included in the available routes from which the suitable route is selected comprises a summation of the respective link metric values of the links included in the available routes from which the suitable route is selected.

10. Apparatus according to claim 8 or claim 9, wherein the special link metric value is of a value that any overall routes that involve the theoretical destination will be ones of last resort.

11. Apparatus according to any of claims 8 to 10, wherein the special link metric value is higher than that of the conventionally available routes in the ad hoc network.

12. Apparatus according to any of claims 8 to 11, wherein the ad hoc network is operated under the OLSRv2 protocol.

13. Apparatus according to any of claims 8 to 12, wherein some or all of the nodes are unmanned vehicles.

14. A program or plurality of programs arranged such that when executed by a computer system or one or more processors it/they cause the computer system or the one or more processors to operate in accordance with the method of any of claims 1 to 7.

15. A machine readable storage medium storing a program or at least one of the plurality of programs according to claim 14.

## Patentansprüche

1. Verfahren in einem Ad-hoc-Netzwerk, das eine Mehrzahl von Knoten umfasst, die in zwei oder mehr Teilnetzwerken verteilt sind, wobei das Verfahren umfasst, dass:
ein Knoten bestimmt, dass er sich von einem ersten Teilnetzwerk in ein zweites Teilnetzwerk bewegt;
der Knoten während seiner Verbindung mit einem ersten Teilnetzwerk:
ein theoretisches Ziel in einem zweiten Teilnetzwerk, mit dem der Knoten gegenwärtig nicht verbunden ist, als Teil einer theoretischen Route zwischen dem ersten und zweiten Teilnetzwerk anzeigt;
einen speziellen Verbindungsmetrikwert, der eine geringere Wahrscheinlichkeit von Auswahl als eine geeignete Route zum Senden von Nachrichten im Vergleich zu herkömmlicherweise verfügbaren Routen zwischen dem ersten und zweiten Teilnetzwerk im Ad-hoc-Netzwerk ergibt, mit dem theoretischen Ziel im zweiten Teilnetzwerk assoziiert, wobei das Ad-hoc-Netzwerk ein Routing-Protokoll einsetzt, in welchem die geeignete Route basierend auf einem Wert einer Kombination der jeweiligen Verbindungsmetrikwerte von Verbindungen ausgewählt wird, die in den verfügbaren Routen enthalten sind, die theoretische Routen umfassen, aus welchen die geeignete Route ausgewählt wird;
wobei das Verfahren ferner umfasst:
wenn keine herkömmlichen Routen verfügbar sind, Bestimmen, dass eine Nachricht von einem weiteren Knoten im ersten Teilnetzwerk über die theoretische Route an einen zweiten weiteren Knoten im zweiten Teilnetzwerk gesendet werden soll;
wobei der Knoten die Nachricht vom weiteren Knoten empfängt, wenn der Knoten an einem ersten Standort ist und während er mit dem ersten Teilnetzwerk verbunden ist;
der Knoten de Nachricht speichert;
der Knoten sich vom ersten Standort zu einem zweiten Standort bewegt, um eine Verbindung mit dem zweiten Teilnetzwerk herzustellen, um dadurch die theoretische Route in eine neue reale Route zu verwandeln; und
der Knoten die Nachricht entweder direkt oder über das zweite Teilnetzwerk als Teil der neuen realen Route an den zweiten weiteren Knoten sendet.

2. Verfahren nach Anspruch 1, wobei die Kombination der jeweiligen Verbindungsmetrikwerte der Verbindungen, die in den verfügbaren Routen enthalten sind, aus welchen die geeignete Route ausgewählt wird, eine Summierung der jeweiligen Verbindungsmetrikwerte der Verbindungen umfasst, die in den verfügbaren Routen enthalten sind, aus welchen die geeignete Route ausgewählt wird.

3. Verfahren nach Anspruch 1 oder 2, wobei der spezielle Verbindungsmetrikwert einen Wert aufweist, dass es sich bei allen Gesamtrouten, die das theoretische Ziel umfassen, um einen letzten Ausweg handelt.

4. Verfahren nach einem der Ansprüche 1 bis 3, wobei der spezielle Verbindungsmetrikwert höher als jener der herkömmlicherweise verfügbaren Routen im Ad-hoc-Netzwerk ist.

5. Verfahren nach einem der Ansprüche 1 bis 4, wobei das Ad-hoc-Netzwerk gemäß einem proaktiven Routing-Protokoll betrieben wird.

6. Verfahren nach einem der Ansprüche 1 bis 5, wobei das Ad-hoc-Netzwerk gemäß einem Verbindungszustands-Routing-Protokoll, gegebenenfalls dem OLSRv2-Protokoll, betrieben wird.

7. Verfahren nach einem der Ansprüche 1 bis 6, wobei einige oder alle der Knoten unbemannte Fahrzeuge sind.

8. Vorrichtung in einem Knoten eines Ad-hoc-Netzwerks, das eine Mehrzahl von Knoten umfasst, die in zwei oder mehr Teilnetzwerken verteilt sind, wobei die Vorrichtung umfasst:
Mittel zum Bestimmen, dass der Knoten sich von einem ersten Teilnetzwerk in ein zweites Teilnetzwerk bewegt;
Mittel für den Knoten zum Anzeigen während seiner Verbindung mit einem ersten Teilnetzwerk eines theoretischen Ziels in einem zweiten Teilnetzwerk, mit dem der Knoten gegenwärtig nicht verbunden ist, als Teil einer theoretischen Nachrichtenroute zwischen dem ersten und zweiten Teilnetzwerk;
Mittel zum Assoziieren eines speziellen Verbindungsmetrikwerts, der eine geringere Wahrscheinlichkeit von Auswahl als eine geeignete Route zum Senden von Nachrichten im Vergleich zu herkömmlicherweise verfügbaren Routen zwischen dem ersten und zweiten Teilnetzwerk im Ad-hoc-Netzwerk ergibt, mit dem theoretischen Ziel im zweiten Teilnetzwerk, wobei das Ad-hoc-Netzwerk ein Routing-Protokoll einsetzt, in welchem die geeignete Route basierend auf einem Wert einer Kombination der jeweiligen Verbindungsmetrikwerte von Verbindungen ausgewählt wird, die in den verfügbaren Routen enthalten sind, die theoretische Routen umfassen, aus welchen die geeignete Route ausgewählt wird;
wobei die Vorrichtung ferner umfasst:
Mittel zum Bestimmen, dass eine Nachricht von einem weiteren Knoten im ersten Teilnetzwerk über die theoretische Route an einen zweiten weiteren Knoten im zweiten Teilnetzwerk gesendet werden soll, wenn keine herkömmlichen Routen verfügbar sind;
Mittel für den Knoten zum Empfangen der Nachricht vom weiteren Knoten, wenn der Knoten an einem ersten Standort ist und während er mit dem ersten Teilnetzwerk verbunden ist;
Mittel für den Knoten zum Speichern der Nachricht; und
Mittel zum Verwandeln der theoretischen Route in eine neue reale Route, nachdem sich der Knoten vom ersten Standort zu einem zweiten Standort bewegt hat, um eine Verbindung mit dem zweiten Teilnetzwerk herzustellen, und wobei der Knoten die Nachricht entweder direkt oder über das zweite Teilnetzwerk als Teil der neuen realen Route an einen zweiten weiteren Knoten sendet.

9. Vorrichtung nach Anspruch 8, wobei die Kombination der jeweiligen Verbindungsmetrikwerte der Verbindungen, die in den verfügbaren Routen enthalten sind, aus welchen die geeignete Route ausgewählt wird, eine Summierung der jeweiligen Verbindungsmetrikwerte der Verbindungen umfasst, die in den verfügbaren Routen enthalten sind, aus welchen die geeignete Route ausgewählt wird.

10. Vorrichtung nach Anspruch 8 oder 9, wobei der spezielle Verbindungsmetrikwert einen Wert aufweist, dass es sich bei allen Gesamtrouten, die das theoretische Ziel umfassen, um einen letzten Ausweg handelt.

11. Vorrichtung nach einem der Ansprüche 8 bis 10, wobei der spezielle Verbindungsmetrikwert höher als jener der herkömmlicherweise verfügbaren Routen im Ad-hoc-Netzwerk ist.

12. Vorrichtung nach einem der Ansprüche 8 bis 11, wobei das Ad-hoc-Netzwerk gemäß dem OLSRv2-Protokoll betrieben wird.

13. Vorrichtung nach einem der Ansprüche 8 bis 12, wobei einige oder alle der Knoten unbemannte Fahrzeuge sind.

14. Programm oder Mehrzahl von Programmen, das/die derart ausgelegt ist/sind, dass es/sie bei Ausführung durch ein Computersystem oder einen oder mehrere Prozessoren das Computersystem oder den einen oder die mehreren Prozessoren veranlasst/veranlassen, gemäß dem Verfahren nach einem der Ansprüche 1 bis 7 zu funktionieren.

15. Maschinenlesbares Speichermedium, das ein Programm oder wenigstens eines der Mehrzahl von Programmen nach Anspruch 14 speichert.

## Revendications

1. Procédé mis en oeuvre dans un réseau *ad hoc* comprenant une pluralité de noeuds répartis dans deux sous-réseaux ou plus, le procédé comprenant les étapes ci-dessous dans lesquelles ou consistant à :
un noeud détermine qu'il se déplacera d'un premier sous-réseau vers un second sous-réseau ;
le noeud, tout en étant connecté à un premier sous-réseau, annonce une destination théorique dans un second sous-réseau auquel le noeud n'est pas actuellement connecté, dans le cadre d'un itinéraire théorique entre le premier sous-réseau et le second sous-réseau ;
associer, à la destination théorique dans le second sous-réseau, une valeur métrique de liaison spéciale qui donne une probabilité réduite de sélection en tant qu'un itinéraire pertinent pour transmettre des messages, par rapport à des itinéraires conventionnellement disponibles entre le premier sous-réseau et le second sous-réseau du réseau *ad hoc,* le réseau *ad hoc* employant un protocole de routage dans lequel l'itinéraire pertinent est sélectionné sur la base d'une valeur d'une combinaison des valeurs métriques de liaisons respectives des liaisons incluses dans les itinéraires disponibles incluant des itinéraires théoriques à partir desquels l'itinéraire pertinent est sélectionné : le procédé comprenant en outre les étapes ci-dessous consistant à ou dans lesquelles :
lorsque des itinéraires conventionnels ne sont pas disponibles :
déterminer qu'un message en provenance d'un noeud supplémentaire dans le premier sous-réseau doit être transmis, par l'intermédiaire de l'itinéraire théorique, à un second noeud supplémentaire dans le second sous-réseau ;
le noeud reçoit le message en provenance du noeud supplémentaire lorsque le noeud se situe à un premier emplacement et tandis qu'il est connecté au premier sous-réseau ;
le noeud stocke le message ;
le noeud se déplace, d'un premier emplacement à un second emplacement, en vue de se connecter au second sous-réseau, transformant ainsi l'itinéraire théorique en un nouvel itinéraire réel ; et
le noeud transmet le message au second noeud supplémentaire, soit directement, soit par l'intermédiaire du second sous-réseau dans le cadre du nouvel itinéraire réel.

2. Procédé selon la revendication 1, dans lequel la combinaison des valeurs métriques de liaisons respectives des liaisons incluses dans les itinéraires disponibles à partir desquels l'itinéraire pertinent est sélectionné comprend une sommation des valeurs métriques de liaisons respectives des liaisons incluses dans les itinéraires disponibles à partir desquels l'itinéraire pertinent est sélectionné.

3. Procédé selon la revendication 1 ou 2, dans lequel la valeur métrique de liaison spéciale est d'une valeur telle que tous les itinéraires globaux qui impliquent la destination théorique seront des itinéraires de dernier recours.

4. Procédé selon l'une quelconque des revendications 1 à 3, dans lequel la valeur métrique de liaison spéciale est supérieure à celle des itinéraires conventionnellement disponibles dans le réseau *ad hoc.*

5. Procédé selon l'une quelconque des revendications 1 à 4, dans lequel le réseau *ad hoc* est exploité en vertu d'un protocole de routage proactif.

6. Procédé selon l'une quelconque des revendications 1 à 5, dans lequel le réseau *ad hoc* est exploité en vertu d'un protocole de routage d'état de liaison, facultativement du protocole OLSRv2.

7. Procédé selon l'une quelconque des revendications 1 à 6, dans lequel certains noeuds ou tous les noeuds correspondent à des véhicules sans pilote.

8. Appareil dans un noeud d'un réseau *ad hoc,* le réseau *ad hoc* comprenant une pluralité de noeuds répartis dans deux sous-réseaux ou plus, l'appareil comprenant :
un moyen pour déterminer que le noeud se déplacera d'un premier sous-réseau vers un second sous-réseau ;
un moyen, lorsque le noeud est connecté à un premier sous-réseau, permettant au noeud d'annoncer une destination théorique dans un second sous-réseau auquel le noeud n'est pas actuellement connecté, dans le cadre d'un itinéraire de message théorique entre le premier sous-réseau et le second sous-réseau ;
un moyen pour associer, à la destination théorique dans le second sous-réseau, une valeur métrique de liaison spéciale qui donne une probabilité réduite de sélection en tant qu'un itinéraire pertinent pour transmettre des messages, par rapport à des itinéraires conventionnellement disponibles entre le premier sous-réseau et le second sous-réseau du réseau *ad hoc,* le réseau *ad hoc* employant un protocole de routage dans lequel l'itinéraire pertinent est sélectionné sur la base d'une valeur de combinaison des valeurs métriques de liaisons respectives des liaisons incluses dans les itinéraires disponibles incluant des itinéraires théoriques à partir desquels l'itinéraire pertinent est sélectionné, l'appareil comportant en outre :
un moyen pour, lorsque des itinéraires conventionnels ne sont pas disponibles, déterminer qu'un message en provenance d'un noeud supplémentaire dans le premier sous-réseau doit être transmis, par l'intermédiaire de l'itinéraire théorique, à un second noeud supplémentaire dans le second sous-réseau ;
un moyen permettant au noeud de recevoir le message en provenance du noeud supplémentaire lorsque le noeud se situe à un premier emplacement et tandis qu'il est connecté au premier sous-réseau ;
un moyen permettant au noeud de stocker le message ; et
un moyen pour, après que le noeud s'est déplacé du premier emplacement vers un second emplacement, se connecter au second sous-réseau, transformant ainsi l'itinéraire théorique en un nouvel itinéraire réel, et dans lequel le noeud transmet le message à un second noeud supplémentaire soit directement, soit par l'intermédiaire du second sous-réseau dans le cadre du nouvel itinéraire réel.

9. Appareil selon la revendication 8, dans lequel la combinaison des valeurs métriques de liaisons respectives des liaisons incluses dans les itinéraires disponibles à partir desquels l'itinéraire pertinent est sélectionné comprend une sommation des valeurs métriques de liaisons respectives des liaisons incluses dans les itinéraires disponibles à partir desquels l'itinéraire pertinent est sélectionné.

10. Appareil selon la revendication 8 ou 9, dans lequel la valeur métrique de liaison spéciale est d'une valeur telle que tous les itinéraires globaux qui impliquent la destination théorique seront des itinéraires de dernier recours.

11. Appareil selon l'une quelconque des revendications 8 à 10, dans lequel la valeur métrique de liaison spéciale est supérieure à celle des itinéraires conventionnellement disponibles dans le réseau *ad hoc.*

12. Appareil selon l'une quelconque des revendications 8 à 11, dans lequel le réseau *ad hoc* est exploité en vertu du protocole OLSRv2.

13. Appareil selon l'une quelconque des revendications 8 à 12, dans lequel certains noeuds ou tous les noeuds correspondent à des véhicules sans pilote.

14. Programme ou pluralité de programmes agencés de sorte que, lorsqu'il est ou lorsqu'ils sont exécuté(s) par un système informatique ou un ou plusieurs processeurs, il(s) amène(nt) le système informatique ou ledit un ou lesdits plusieurs processeurs à fonctionner conformément au procédé selon l'une quelconque des revendications 1 à 7.

15. Support de stockage lisible par machine stockant un programme ou au moins un programme parmi la pluralité de programmes selon la revendication 14.
